# EUROPÄISCHE PATENTANMELDUNG

(11) **EP 0 834 422 A2**
(43) Veröffentlichungstag der Anmeldung: **08.04.1998**
(21) Anmeldenummer: 97115790.4
(22) Anmeldetag: 11.09.1997
(51) Int. Cl.: B60N 3/00

(54) **Innenausstattungsteil**

(30) Priorität: 05.10.1996 DE 19641134
(71) Anmelder: BECKER GROUP EUROPE GmbH, 42285 Wuppertal (DE)
(72) Erfinder: Daniel, Dieter, 42349 Wuppertal (DE); Zigman, Marian, 42655 Solingen (DE)

(57) **Zusammenfassung**

Bei einem Innenausstrattungsteile, wie Armauflage, Armlehne, Haltegriff od. dgl., insbesondere für Fahrzeug mit einem aus PUR-Schaum bestehenden, von einer daran haftenden Hüllfolie (4) umgebenen Kern (2) ist vorgesehen, daß die Hüllfolie (4) PVC-frei und zweilagig ausgeführt ist, wobei die eine innere Lage (5) aus einem zum PUR-Schaum haftenden und die andere äußere Lage (6) aus einem nicht zum PUR-Schaum haftenden Kunststoffmaterial besteht.

## Beschreibung

Die Erfindung bezieht sich auf ein Innenausstattungsteil, wie Armauflage, Armlehne, Haltegriff od. dgl., insbesondere für Fahrzeuge mit einem aus PUR-Schaum bestehenden, von einer daran haftenden Hüllfolie umgebenen Kern.

Innenausstattungsteile der vorgenannten Art weisen üblicherweise eine aus PVC bestehende, im Rotationsverfahren hergestellte Hüllfolie auf die mit den Kern bildenden PUR-Schaum hinterschäumt ist. Bei der Herstellung eines solchen Innenausstattungsteils, wird zunächst eine Hüllfolie im vorgenannten Rotationsverfahren gebildet, die Hüllfolie ggf. mit einer Verstärkungseinlage bestückt und sodann in ein Schäumwerkzeug eingelegt. In das Schäumwerkzeug wird sodann ein Polyurethanschaumstoff bildendes Reaktionsprodukt eingegeben und die Hüllfolie hinterschäumt. Abgesehen davon, daß aus einer PVC-Haut gebildete Hüllfolien zunehmend von der Käuferschaft abgelehnt werden, macht die aus einer PVC-Folie und PUR-Schaum bestehende Materialkombination den Einsatz von Trennmitteln erforderlich. Beim Ausschäumen ist es nämlich praktisch nicht möglich und aus technischen Gründen auch nicht erwünscht, einen engen und physisch vollkommenen Kontakt zwischen der Verstärkungseinlage und der Hüllfolie und der Schäumform bzw. dem Schäumformdeckel herbeizuführen, wodurch oftmals ein Überquellen des schäumbaren Materials verursacht wird, welches Material sich dann an der Außenseite der Hüllfolie festsetzt. Diese Erscheinung verursacht dann zumindest aufwendige Nachbearbeitungsmaßnahmen zur Entfernung des übergetretenen Schaummaterial. Der geschilderte Schaumübertritt erschwert aber auch das Ausformen des Fertigteils aus der Schäumform wesentlich, weshalb es im allgemeinen erforderlich ist, sowohl die Hüllfolie als auch die Schäumform mit dem erwähnten Trennmittel zu besprühen, was zusätzliche Material- und Arbeitskosten verursacht.

Der vorliegenden Erfindung liegt nun die Aufgabe zugrunde ein Innenausstattungsteil der Eingangs genannten Art zur Verfügung zu stellen, welches ohne den Einsatz von Trennmitteln gefertigt werden kann.

Zur Lösung dieser Aufgabe ist erfindungsgemäß vorgesehen, daß die Hüllfolie PVC-frei und zweilagig ausgeführt ist, wobei die eine innere Lage aus einem zum PUR-Schaum haftenden und die andere äußere Lage aus einem nicht zum PUR-Schaum haftenden Kunststoffmaterial besteht.

Das erfindungsgemäße Innenausstattungsteil besitzt zunächst den Vorteil, daß gemäß den Forderungen der Käuferschaft kein PVC mehr eingesetzt wird. Ein weiterer wesentlicher Vorteil der Erfindung ist darin zu sehen, daß die innere Lage der Hüllfolie zum PUR-Schaum haftet und damit den Verbund zwischen PUR-Schaum und Hüllfolie sicherstellt. Dagegen haftet die äußere Lage der Hüllfolie nicht zum PUR-Schaum mit dem besonderen Vorteil, daß nunmehr auf den Einsatz von Trennmitteln verzichtet werden kann, denn mangels Haftung kann etwa übergequollenes Schaummaterial mühelos von der Außenseite der Hüllfolie aufgewischt werden.

Bei dem erfindungsgemäßen Innenausstattungsteil kann die Hüllfolie als Hohlkörper und der Kern durch Hinterschäumen der Hüllfolie gebildet sein. Gemäß einer bevorzugten Weiterbildung der Erfindung ist dabei vorgesehen, daß die Hüllfolie als im Coextrusions-Blasformverfahren erstellter Hohlkörper ausgeführt ist. Beim Coextrusions-Blasformverfahren werden die erfindungsgemäß vorgesehenen Materialtypen zusammengeführt und gemeinsam geformt, was relativ einfach und kostengünstig zu praktizieren ist.

Gemäß einer Ausgestaltung der Erfindung besteht sowohl die innere als auch die äußere Lage der Hüllfolie aus einem thermoplastischen Elastomer. Für die innere schaumhaftende Lage kann dabei, wie Versuche gezeigt haben, mit Vorteil ein von der Firma Kraiburg, Waldkraiburg unter der Bezeichnung 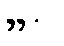 Thermolast K 6352/48 - 97575" vertriebenes Material (haftungsmodifizierte Sondertype S-E/B-S-Compound) eingesetzt werden, während für die äußere nicht haftende Lage PP/EPDM (Santoprene 101-87) zum Einsatz gelangen kann. Wesentlich ist, daß es sich bei den Materialien für die innere und äußere Hüllfolieneinlage um thermoplastische Elastomere (TPE's) auf polyolefinischer Basis handelt, so daß eine Verträglichkeit im Verbund gegeben ist.

Die Hüllfolie ist bevorzugterweise mit einer z.B. lederartigen Oberflächennarbung versehen, die beim Blasformvorgang durch entsprechende Werkzeugauslegung erzielt werden kann.

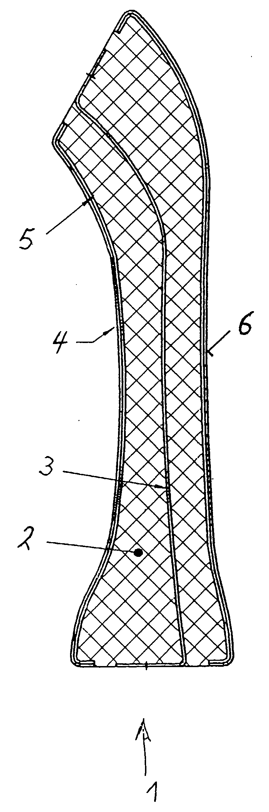

Ein Ausführungsbeispiel der Erfindung wird im folgenden anhand der Zeichnung näher beschrieben.

Die einzige Fig. zeigt ein Innenausstattungsteil in Form eines Griffkörpers 1. Der Griffkörper 1 besteht aus einem aus PUR-Schaum gebildeten Kern 2, in dem eine Verstärkungseinlage 3 eingelagert ist und aus einer den Kern 2 umgebenen Hüllfolie 4.

Die Hüllfolie 4 ist zweilagig ausgeführt und besteht aus einer inneren dem Kern 2 zugewandten Lage 5 und einer äußeren Lage 6. Die innere Lage 5 der Hüllfolie 4 besteht aus einem zum PUR-Schaum des Kerns 2 haftenden Kunststoffmaterial während die äußere, an der inneren Lage 5 haftende Lage 6 aus einem nicht zum PUR-Schaum haftenden Kunststoffmaterial besteht. Beide Lagen 5 und 6 der Hüllfolie 4 bestehen aus einem thermoplastischen Elastomer.

Die Hüllfolie 4 ist als Blasformkörper ausgebildet, wobei ein Coextrusions-Blasformverfahren eingesetzt wird, um die beiden Lagen 5 und 6 zu bilden. Das Blasformverfahren als solches gehört zum Stand der Technik und bedarf daher hier nicht der näheren Erläuterung.

Der die Hüllfolie 4 bildende Blasformkörper ist mit Schaummaterial ausgeschäumt, um den Kern 2 zu bilden. Auch das Aus- oder Hinterschäumen ist ein zum Stande der Technik gehörender Vorgang, der hier nicht näher zu erläutern ist.

An den umhüllungsfreien Endbereichen des Griffkörpers 1 befinden sich abgewinkelte Enden der Verstärkungseinlage 3, die zur Aufnahme und Verankerung nicht gezeigter Befestigungselemente dienen.

Der Vollständigkeit halber sei erwähnt, daß das neue Innenausstattungsteils hinsichtlich Haptik einen gepolsterten, komfortablen, lederartigen Eindruck macht.

## Patentansprüche

1. Innenausstattungsteil, wie Armauflage, Armlehne, Haltegriff od. dgl. insbesondere für Fahrzeuge mit einem aus PUR-Schaum bestehenden, von einer daran haftenden Hüllfolie (4) umgebenen Kern (2), dadurch gekennzeichnet, daß die Hüllfolie (4) PVC-frei und zweilagig ausgeführt ist, wobei die eine innere Lage (5) aus einem zum PUR-Schaum haftenden und die andere äußere Lage (6) aus einem nicht zum PUR-Schaum haftenden Kunststoffmaterial besteht.

2. Innenausstattungsteil nach Anspruch 1, dadurch gekennzeichnet, daß die Hüllfolie (4) als Hohlkörper ausgeführt und der Kern (2) durch Hinterschäumen der Hüllfolie (4) gebildet ist.

3. Innenausstattungsteil nach Anspruch 1 oder 2, dadurch gekennzeichnet, daß die Hüllfolie (4) als Coextrusions-Blasformverfahren erstellter Hohlkörper ausgeführt ist.

4. Innenausstattungsteil nach einem oder mehreren der vorangegangenen Ansprüche, dadurch gekennzeichnet, daß sowohl die eine innere Lage (5) als auch die andere äußere Lage (6) der Hüllfolie (4) aus einem thermoplastischen Elastomer besteht.

5. Innenausstattungsteil nach einem oder mehreren der vorangegangenen Ansprüche, dadurch gekennzeichnet, daß die Hüllfolie (4) eine Oberflächennarbung aufweist.
